# EUROPEAN PATENT APPLICATION

(11) **EP 3 540 605 A1**
(43) Date of publication of application: **18.09.2019**
(21) Application number: 18189431.2
(22) Date of filing: 17.08.2018
(51) Int. Cl.: G06F 13/42, G06F 13/362

(54) **CPLD CACHE APPLICATION IN A MULTI-MASTER TOPOLOGY SYSTEM**

(30) Priority: 14.03.2018 US 201815921092
(71) Applicant: Quanta Computer Inc., Taoyuan City 33377 (TW)
(72) Inventor: CHOU, Chi-Tsun, 33377 Taoyuan City (TW); CHANG, Ying-Che, 33377 Taoyuan City (TW); CHANG, Yen-Tse, 33377 Taoyuan City (TW); LO, Wen-Hua, 33377 Taoyuan City (TW)
(74) Representative: Krauns, Christian

(57) **Abstract**

An example multi-node system that prevents multi-master issues on a common bus is disclosed. The system has a first node and a second node. A backplane is coupled to the first and second nodes via a system management bus. A complex programmable logic device is coupled to the system management bus. The complex programmable logic device includes hardware logic operable to arbitrate between bus commands from the first and second nodes.

## Description

### TECHNICAL FIELD

The present disclosure relates generally to command code for a multi-node system. More particularly, aspects of this disclosure relate to using a complex programmable logic device for command code in a multi-node system to avoid multi-master issues.

### BACKGROUND

Electronic devices, such as servers, include electronic components that are connected to various busses to send and receive data and commands. Many servers have multiple nodes that are connected to a backplane for a common power supply. The backplane also is connected to a bus that allows data and commands to be exchanged between the nodes and the backplane to monitor the power supplies.

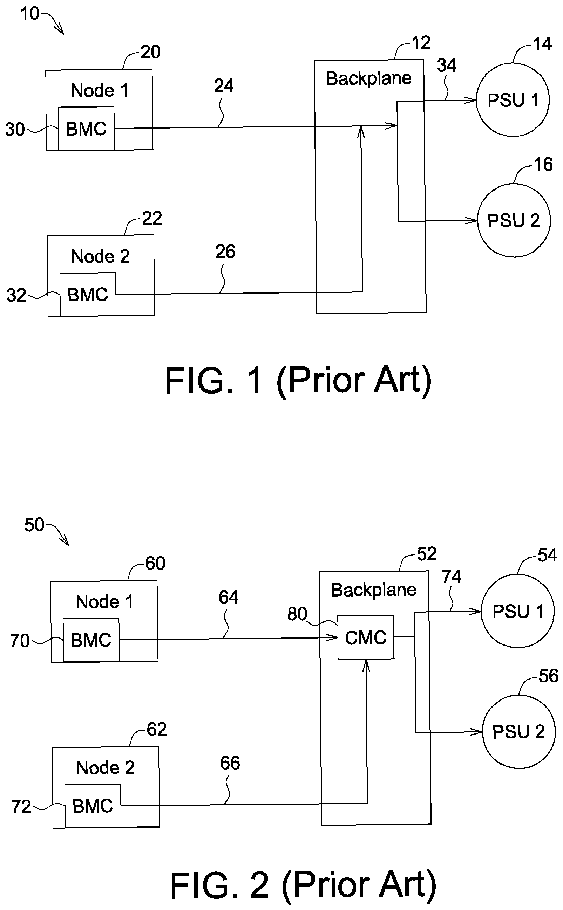

FIG. 1 shows a typical known, prior art, multi-node system 10 that may be a server or other large network device. The multi-node system 10 has a backplane 12 that is connected to two power supply units 14 and 16. The backplane 12 is connected to system nodes 20 and 22 via system management (SM) bus lines 24 and 26, respectively. In this example, both system nodes 20 and 22 include respective baseboard management controllers (BMC) 30 and 32. The BMCs 30 and 32 handle communications through the bus lines 24 and 26. The bus lines 24 and 26 are used by the nodes 20 and 22 to send signals to the backplane 12. A common SMbus protocol is the inter-integrated circuit (I2C) bus protocol. The I2C protocol is a packet switched, single-ended, serial computer bus protocol. This protocol is adaptable for a master slave configuration where a master device sends commands to a slave device. When the I2C protocol is used in a multi-node system, there may be multiple masters, as each node, such as the nodes 20 and 22, may control the bus lines 24 and 26 to the backplane 12 at any time. The backplane 12 sends commands to, and receives data from, the power supply units 14 and 16 via a power management bus 34. The BMCs 30 and 32 send and receive commands from power supply units 14 and 16 through respective SMbus lines 24 and 26.

Thus, the system 10 is an example of an I2C environment where multiple masters may be driving the bus to the backplane 12. When there are two or more possible master devices connecting to one slave devices in an I2C topology design, multi-master issues may arise. In such cases, each node needs to be able to access the bus despite the fact that another node may be currently communicating with the backplane and the bus is therefore busy. In order to solve this issue, a common solution used in the server industry is a micro-controller provided on the backplane. Such a microcontroller controls communications from each of the nodes and therefore arbitrates disputes when more than one node seeks to use the bus. The microcontroller is commonly termed a central message controller (CMC).

FIG. 2 is a block diagram of another prior art, multi-node system 50 that uses a CMC to prevent multi-master issues. The multi-node system 50 has a backplane 52 that is connected to two power supply units 54 and 56. The backplane 52 is connected to system nodes 60 and 62 via SMbus lines 64 and 66 respectively. In this example, the system 50 uses the I2C protocol for the bus lines 64 and 66. In this example, both system nodes 60 and 62 include respective baseboard management controllers (BMC) 70 and 72. The backplane 52 sends commands to, and receives data from, the power supply units 54 and 56 via a power management bus 74. The backplane 52 includes a CMC 80 that executes software to arbitrate disputes between master commands from the nodes 60 and 62, thereby avoiding multi-master issues.

Using a CMC to address multi-master issues also raises potential problems. Since the operation of the CMC 80 in FIG. 2 is basically structured by pure software, a CMC will often cause multi-node systems, such as a server, to force a shut down if the software for arbitrating commands goes into a dead lock situation. Such occurrences impede continuous server operation due to the potential unreliability of the software executed by the CMC.

Thus, there is a need for a device that successfully arbitrates multi-master commands made by multiple nodes connected to a system management bus. There is also a need for a system that does not rely on software to arbitrate multi-master commands. There is a further need for a system that allows nodes in a multi-node system to obtain power supply unit data without additional processing load on a baseboard management controller of the node.

### SUMMARY

One disclosed example is a multi-node system that prevents multi-master issues The system has a first node and a second node. A backplane is coupled to the first and second nodes via a system management bus. A complex programmable logic device is coupled to the system management bus. The complex programmable logic device includes hardware logic operable to arbitrate between bus commands from the first and second nodes.

Another example is a method of arbitrating commands between two nodes coupled via a system management bus to a backplane. A complex programmable logic device is coupled to the system management bus. A first command is received from a first node via the system management bus. A second command is received from the second node via the system management bus. Hardware logic of the complex programmable logic device is operated to arbitrate whether the first or second node constitutes a master for the system management bus.

The above summary is not intended to represent each embodiment or every aspect of the present disclosure. Rather, the foregoing summary merely provides an example of some of the novel aspects and features set forth herein. The above features and advantages, and other features and advantages of the present disclosure, will be readily apparent from the following detailed description of representative embodiments and modes for carrying out the present invention, when taken in connection with the accompanying drawings and the appended claims.

### BRIEF DESCRIPTION OF THE DRAWINGS

The disclosure will be better understood from the following description of exemplary embodiments together with reference to the accompanying drawings, in which:
FIG. 1 (PRIOR ART) is a block diagram of a prior art multi-master system;
FIG. 2 (PRIOR ART) is a block diagram of a prior art multi-master system using a CMC to resolve multi-master issues;
FIG. 3 is a block diagram of an example multi-master system using a CPLD device to resolve multi-master issues;
FIG. 4 is a functional block diagram of the CPLD device, the power supply unit and the baseboard management controllers in FIG. 3;
FIG. 5 is a table of I2C commands that may be executed by the CPLD device in FIG. 3; and
FIGs. 6 and 7 illustrate exemplary systems in accordance with various examples of the present disclosure.

The present disclosure is susceptible to various modifications and alternative forms. Some representative embodiments have been shown by way of example in the drawings and will be described in detail herein. It should be understood, however, that the invention is not intended to be limited to the particular forms disclosed. Rather, the disclosure is to cover all modifications, equivalents, and alternatives falling within the spirit and scope of the invention as defined by the appended claims.

### DETAILED DESCRIPTION OF THE ILLUSTRATED EMBODIMENTS

The present inventions can be embodied in many different forms. Representative embodiments are shown in the drawings, and will herein be described in detail. The present disclosure is an example or illustration of the principles of the present disclosure, and is not intended to limit the broad aspects of the disclosure to the embodiments illustrated. To that extent, elements and limitations that are disclosed, for example, in the Abstract, Summary, and Detailed Description sections, but not explicitly set forth in the claims, should not be incorporated into the claims, singly or collectively, by implication, inference, or otherwise. For purposes of the present detailed description, unless specifically disclaimed, the singular includes the plural and vice versa; and the word "including" means "including without limitation." Moreover, words of approximation, such as "about," "almost," "substantially," "approximately," and the like, can be used herein to mean "at," "near," or "nearly at," or "within 3-5% of," or "within acceptable manufacturing tolerances," or any logical combination thereof, for example.

The present disclosure addresses multi-master issues in multi-node systems by adding a complex programmable logic device (CPLD) to arbitrate bus communications between different nodes. The CPLD is added in the middle of the I2C connections between a baseboard management controller of each node and at least one power supply unit (PSU). Proper CPLD code for configuring gates on the CPLD is provided to handle a multi-master situation on the I2C connections between the nodes and the power supply unit. A normal chassis management integrated circuit that relies on software for operation may thus be omitted. Thus, the CPLD and its memory cache may be used for resolving multi-master issues on any system with a multi-master topology, such as a system that uses a PMbus, such as the examples below.

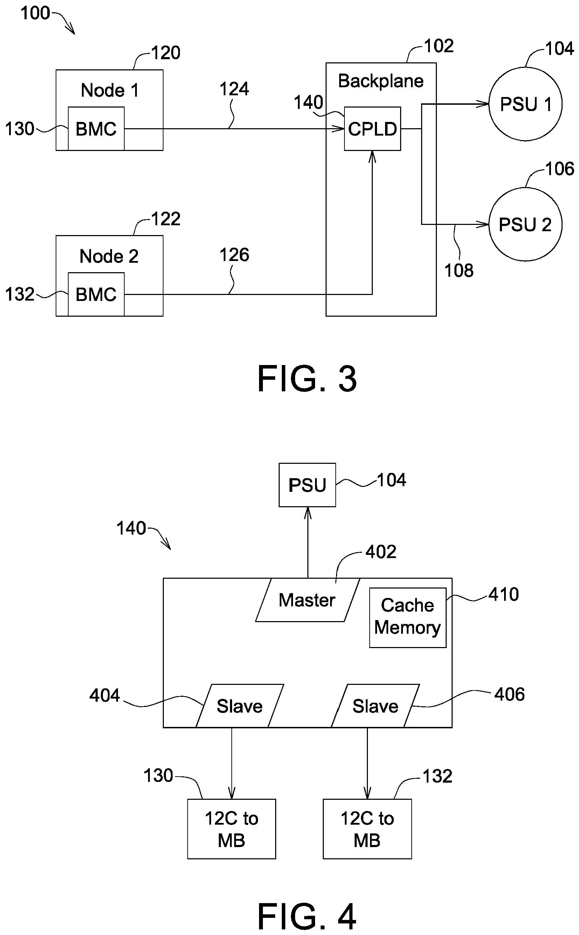

FIG. 3 is a block diagram of an example multi-node system 100 that uses a CPLD to prevent multi-master issues between node communication with a backplane 102. The backplane 102 is connected to two power supply units 104 and 106. The power supply units 104 and 106 are connected to the backplane 102 via a power management (PM) bus 108. The power management bus 108 allows the backplane 102 to receive data from the power supply units 104 and 106. The power management bus 108 also allows the backplane 102 to send control signals to the power supply units 104 and 106 to manage power for the system 100.

The backplane 102 is connected to system nodes 120 and 122 via SMbus lines 124 and 126, respectively. In this example, the system 100 uses the I2C protocol for the bus lines 124 and 126. In this example, both system nodes 120 and 122 include respective baseboard management controllers (BMC) 130 and 132. The BMCs 130 and 132 are directly connected to the bus lines 124 and 126. In this example, the BMCs 130 and 132 handle communications for their respective nodes 120 and 122 over the bus lines 124 and 126. The BMCs 130 and 132 send commands to the backplane 102 over the SMbus lines 124 and 126 and receive data from the backplane 102 over the SMbus lines 124 and 126.

The backplane 102 includes a complex programmable logic device 140 that arbitrates disputes between master commands from the nodes 120 and 122 over the SMbus lines 124 and 126, thereby avoiding multi-master issues. The complex programmable logic device (CPLD) 140 is a hardware device including numerous hardware logic gates that allows implementation of moderately complicated data processing functions. The configuration of the gates is implemented via code to allow the CPLD 140 to perform different functions, such as the solution of multi-master issues. The CPLD 140 includes non-volatile configuration memory that stores the configuration code. Thus, the CPLD 140 can function immediately on system start-up.

A complex programmable logic device such as the CPLD 140 is a much steadier device in comparison to a generic controller executing software, since the functions of the CPLD 140 are embedded in hardware logic. The use of a CPLD such as the CPLD 140 in the system 100 solves multi-master issues that occur in conventional multi-node systems such as the system 10 (in FIG. 1). The CPLD 140 acts as a mediator between the communication of the BMCs 130 and 132 and the power supply units 104 and 106. The CPLD 140 accepts commands from the node 120 and the node 122 and then decides which commands take priority. After prioritization, the CPLD 140 then passes the commands to the power supply units 104 and 106. The hardware logic of the CPLD 140 also solves unsteady implementation from known software solutions, such as the use of the CMC 80 in the system 50 (in FIG. 2). For example, the CPLD 140 may receive a first command from the node 120 via the system management bus line 124. The CPLD 140 may receive a second command from the second node 122 via the system management bus line 126. The CPLD 140 operates hardware logic to arbitrate whether the first node 120 or the second node 122 constitutes a master for the system management bus to the backplane 102.

FIG. 4 is a block diagram of the configuration of the CPLD 140 in relation to the power supply unit 104, and the baseboard management controllers 130 and 132 (in FIG. 3). In this example, the BMCs 130 and 132 relay I2C commands to and from the CPLD 140 to the respective main boards of the nodes 120 and 122 respectively. In this I2C configuration, the CPLD 140 includes a master module 402 that issues commands to slave modules 404 and 406 that represent the nodes 120 and 122. In this example, the slave modules 404 and 406 receive commands from the BMCs 130 and 132. The master module 402 sends commands to the power supply units 140 and 106.

In this example, standard power management (PM) bus command code is stored in a memory 410 of the CPLD 140. Thus, the CPLD 140 is used as a memory cache for the power supply units of the system 100 such as the PSU 104 in FIG. 4. As shown in FIG. 3, the CPLD 140 communicates using the PMbus command code over the power bus 108. As shown in FIG. 4, a host such as the BMC 130 can access the CPLD 140 to obtain power supply unit information with standard PMbus command codes.

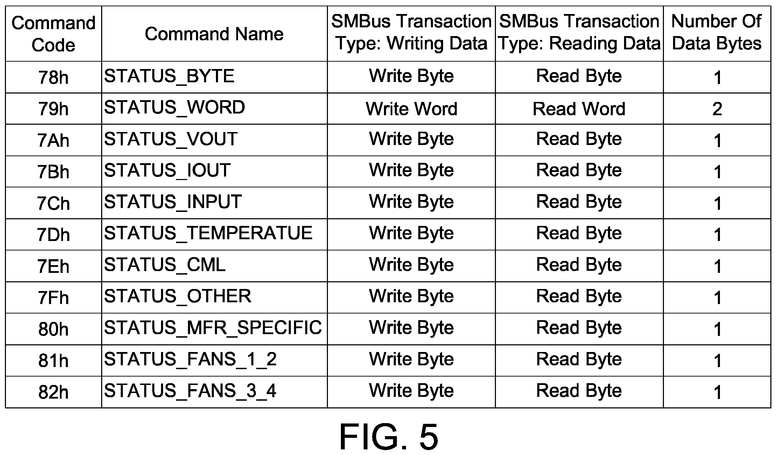

FIG. 5 is a table of example standard power management bus command codes that may be used by one of the baseboard management controllers, such as the baseboard management controllers 130 or 132 (in FIGs. 3 and 4), to obtain performance data from the power supply units, such as the power supply units 104 and 106 in FIG. 3. FIG. 5 shows the command code and command name of different commands that may be used to obtain status data from the power supply units 104 and 106. As shown by the table in FIG. 5, a baseboard management controller can request data such as the voltage output, the current output, the temperature, and fan status of a particular power supply unit by using the correct power management bus command.

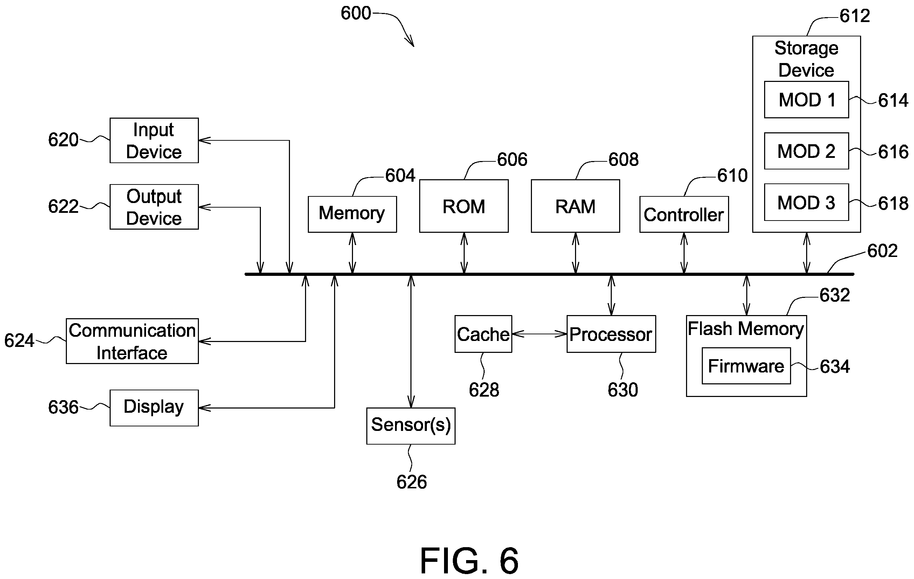

FIG. 6 illustrates an example computing system 600, in which the components of the computing system are in electrical communication with each other using a bus 602. The system 600 includes a processing unit (CPU or processor) 630, and a system bus 602 that couples various system components, including the system memory 604 (e.g., read only memory (ROM) 606 and random access memory (RAM) 608), to the processor 630. The system 600 can include a cache of high-speed memory connected directly with, in close proximity to, or integrated as part of the processor 630. The system 600 can copy data from the memory 604 and/or the storage device 612 to the cache 628 for quick access by the processor 630. In this way, the cache can provide a performance boost for processor 630 while waiting for data. These and other modules can control or be configured to control the processor 630 to perform various actions. Other system memory 604 may be available for use as well. The memory 604 can include multiple different types of memory with different performance characteristics. The processor 630 can include any general purpose processor and a hardware module or software module, such as module 1 614, module 2 616, and module 3 618 embedded in storage device 612. The hardware module or software module is configured to control the processor 630, as well as a special-purpose processor where software instructions are incorporated into the actual processor design. The processor 630 may essentially be a completely self-contained computing system, containing multiple cores or processors, a bus, memory controller, cache, etc. A multi-core processor may be symmetric or asymmetric.

To enable user interaction with the computing device 600, an input device 620 is provided as an input mechanism. The input device 620 can comprise a microphone for speech, a touch-sensitive screen for gesture or graphical input, keyboard, mouse, motion input, and so forth. In some instances, multimodal systems can enable a user to provide multiple types of input to communicate with the system 600. In this example, an output device 622 is also provided. The communications interface 624 can govern and manage the user input and system output.

Storage device 612 can be a non-volatile memory to store data that are accessible by a computer. The storage device 612 can be magnetic cassettes, flash memory cards, solid state memory devices, digital versatile disks, cartridges, random access memories (RAMs) 608, read only memory (ROM) 606, and hybrids thereof.

The controller 610 can be a specialized microcontroller or processor on the system 600, such as a BMC (baseboard management controller). In some cases, the controller 610 can be part of an Intelligent Platform Management Interface (IPMI). Moreover, in some cases, the controller 610 can be embedded on a motherboard or main circuit board of the system 600. The controller 610 can manage the interface between system management software and platform hardware. The controller 610 can also communicate with various system devices and components (internal and/or external), such as controllers or peripheral components, as further described below.

The controller 610 can generate specific responses to notifications, alerts, and/or events, and communicate with remote devices or components (e.g., electronic mail message, network message, etc.) to generate an instruction or command for automatic hardware recovery procedures, etc. An administrator can also remotely communicate with the controller 610 to initiate or conduct specific hardware recovery procedures or operations, as further described below.

The controller 610 can also include a system event log controller and/or storage for managing and maintaining events, alerts, and notifications received by the controller 610. For example, the controller 610 or a system event log controller can receive alerts or notifications from one or more devices and components, and maintain the alerts or notifications in a system event log storage component.

Flash memory 632 can be an electronic non-volatile computer storage medium or chip that can be used by the system 600 for storage and/or data transfer. The flash memory 632 can be electrically erased and/or reprogrammed. Flash memory 632 can include EPROM (erasable programmable read-only memory), EEPROM (electrically erasable programmable read-only memory), ROM, NVRAM, or CMOS (complementary metal-oxide semiconductor), for example. The flash memory 632 can store the firmware 634 executed by the system 600 when the system 600 is first powered on, along with a set of configurations specified for the firmware 634. The flash memory 632 can also store configurations used by the firmware 634.

The firmware 634 can include a Basic Input/Output System or equivalents, such as an EFI (Extensible Firmware Interface) or UEFI (Unified Extensible Firmware Interface). The firmware 634 can be loaded and executed as a sequence program each time the system 600 is started. The firmware 634 can recognize, initialize, and test hardware present in the system 600 based on the set of configurations. The firmware 634 can perform a self-test, such as a POST (Power-on-Self-Test), on the system 600. This self-test can test the functionality of various hardware components such as hard disk drives, optical reading devices, cooling devices, memory modules, expansion cards, and the like. The firmware 634 can address and allocate an area in the memory 604, ROM 606, RAM 608, and/or storage device 612, to store an operating system (OS). The firmware 634 can load a boot loader and/or OS, and give control of the system 600 to the OS.

The firmware 634 of the system 600 can include a firmware configuration that defines how the firmware 634 controls various hardware components in the system 600. The firmware configuration can determine the order in which the various hardware components in the system 600 are started. The firmware 634 can provide an interface, such as an UEFI, that allows a variety of different parameters to be set, which can be different from parameters in a firmware default configuration. For example, a user (e.g., an administrator) can use the firmware 634 to specify clock and bus speeds; define what peripherals are attached to the system 600; set monitoring of health (e.g., fan speeds and CPU temperature limits); and/or provide a variety of other parameters that affect overall performance and power usage of the system 600. While firmware 634 is illustrated as being stored in the flash memory 632, one of ordinary skill in the art will readily recognize that the firmware 634 can be stored in other memory components, such as memory 604 or ROM 606.

System 600 can include one or more sensors 626. The one or more sensors 626 can include, for example, one or more temperature sensors, thermal sensors, oxygen sensors, chemical sensors, noise sensors, heat sensors, current sensors, voltage detectors, air flow sensors, flow sensors, infrared thermometers, heat flux sensors, thermometers, pyrometers, etc. The one or more sensors 626 can communicate with the processor, cache 628, flash memory 632, communications interface 624, memory 604, ROM 606, RAM 608, controller 610, and storage device 612, via the bus 602, for example. The one or more sensors 626 can also communicate with other components in the system via one or more different means, such as inter-integrated circuit (I2C), general purpose output (GPO), and the like. Different types of sensors (e.g., sensors 626) on the system 600 can also report to the controller 610 on parameters, such as cooling fan speeds, power status, operating system (OS) status, hardware status, and so forth. A display 636 may be used by the system 600 to provide graphics related to the applications that are executed by the controller 610, or the processor 630.

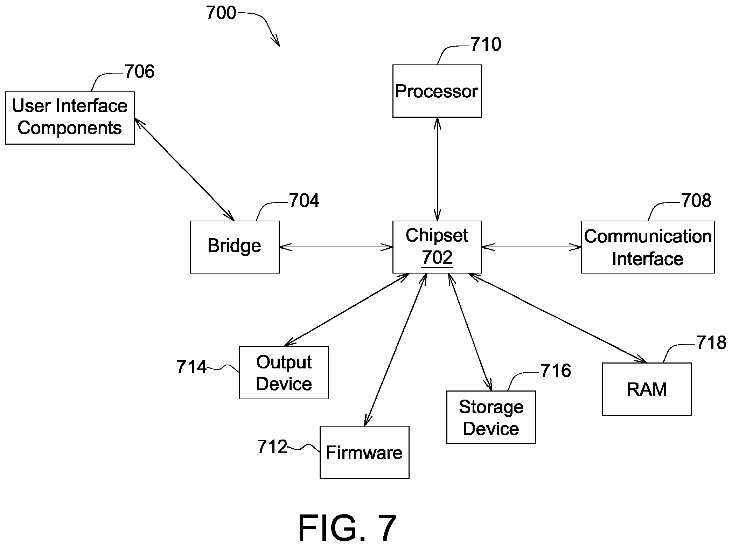

FIG. 7 illustrates an example computer system 700 having a chipset architecture that can be used in executing the described method(s) or operations, and generating and displaying a graphical user interface (GUI). Computer system 700 can include computer hardware, software, and firmware that can be used to implement the disclosed technology. System 700 can include a processor 710, representative of a variety of physically and/or logically distinct resources capable of executing software, firmware, and hardware configured to perform identified computations. Processor 710 can communicate with a chipset 702 that can control input to and output from processor 710. In this example, chipset 702 outputs information to output device 714, such as a display, and can read and write information to storage device 716. The storage device 716 can include magnetic media, and solid state media, for example. Chipset 702 can also read data from and write data to RAM 718. A bridge 704 for interfacing with a variety of user interface components 806, can be provided for interfacing with chipset 702. User interface components 706 can include a keyboard, a microphone, touch detection and processing circuitry, and a pointing device, such as a mouse.

Chipset 702 can also interface with one or more communication interfaces 708 that can have different physical interfaces. Such communication interfaces can include interfaces for wired and wireless local area networks, for broadband wireless networks, and for personal area networks. Further, the machine can receive inputs from a user via user interface components 706, and execute appropriate functions, such as browsing functions by interpreting these inputs using processor 710.

Moreover, chipset 702 can also communicate with firmware 712, which can be executed by the computer system 700 when powering on. The firmware 712 can recognize, initialize, and test hardware present in the computer system 700 based on a set of firmware configurations. The firmware 712 can perform a self-test, such as a POST, on the system 700. The self-test can test the functionality of the various hardware components 702-718. The firmware 712 can address and allocate an area in the RAM memory 718 to store an OS. The firmware 712 can load a boot loader and/or OS, and give control of the system 700 to the OS. In some cases, the firmware 712 can communicate with the hardware components 702-710 and 714-718. Here, the firmware 712 can communicate with the hardware components 702-710 and 714-718 through the chipset 702, and/or through one or more other components. In some cases, the firmware 712 can communicate directly with the hardware components 702-710 and 714-718.

It can be appreciated that example systems 600 and 700 can have more than one processor (e.g., 630, 710), or be part of a group or cluster of computing devices networked together to provide greater processing capability.

As used in this application, the terms "component," "module," "system," or the like, generally refer to a computer-related entity, either hardware (e.g., a circuit), a combination of hardware and software, software, or an entity related to an operational machine with one or more specific functionalities. For example, a component may be, but is not limited to being, a process running on a processor (e.g., digital signal processor), a processor, an object, an executable, a thread of execution, a program, and/or a computer. By way of illustration, both an application running on a controller, as well as the controller, can be a component. One or more components may reside within a process and/or thread of execution and a component may be localized on one computer and/or distributed between two or more computers. Further, a "device" can come in the form of specially designed hardware; generalized hardware made specialized by the execution of software thereon that enables the hardware to perform specific function; software stored on a computer-readable medium; or a combination thereof.

The terminology used herein is for the purpose of describing particular embodiments only, and is not intended to be limiting of the invention. As used herein, the singular forms "a," "an," and "the" are intended to include the plural forms as well, unless the context clearly indicates otherwise. Furthermore, to the extent that the terms "including," "includes," "having," "has," "with," or variants thereof, are used in either the detailed description and/or the claims, such terms are intended to be inclusive in a manner similar to the term "comprising."

Unless otherwise defined, all terms (including technical and scientific terms) used herein have the same meaning as commonly understood by one of ordinary skill in the art. Furthermore, terms, such as those defined in commonly used dictionaries, should be interpreted as having a meaning that is consistent with their meaning in the context of the relevant art, and will not be interpreted in an idealized or overly formal sense unless expressly so defined herein.

While various embodiments of the present invention have been described above, it should be understood that they have been presented by way of example only, and not limitation. Numerous changes to the disclosed embodiments can be made in accordance with the disclosure herein, without departing from the spirit or scope of the invention. Thus, the breadth and scope of the present invention should not be limited by any of the above described embodiments. Rather, the scope of the invention should be defined in accordance with the following claims and their equivalents.

Although the invention has been illustrated and described with respect to one or more implementations, equivalent alterations and modifications will occur or be known to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A system (100), comprising:
a first node (120);
a second node (122);
a backplane (102) coupled to the first and second nodes via a system management bus (124, 126); and
**characterized by** a complex programmable logic device (140) coupled to the system management bus, the complex programmable logic device including hardware logic operable to arbitrate between bus commands from the first and second nodes.

2. The system of claim 1, wherein the system management bus operates with an I2C protocol.

3. The system of claim 1 or 2, further comprising a power supply unit (104, 106) coupled to the backplane via a power management bus (108).

4. The system of claim 3, wherein the complex programmable logic device includes a memory (410) that includes power management commands, wherein the complex programmable logic device is operable to receive performance data from the power supply unit via the power management bus.

5. The system of claim 3 or 4, wherein the first and the second nodes are operable to obtain performance data of the power supply unit by sending a request to the complex programmable logic device.

6. The system of anyone of the claims 1 to 5, wherein at least one of the first and second nodes includes a baseboard management controller (130, 132) coupled to the system management bus.

7. A method of arbitrating commands between two nodes (120, 122) coupled via a system management bus (124, 126) to a backplane (102), the method comprising:
coupling a complex programmable logic device (140) to the system management bus;
receiving a first command from a first node (120) via the system management bus;
receiving a second command from a second node (122) via the system management bus; and
**characterized by** operating hardware logic of the complex programmable logic device to arbitrate whether the first or the second node constitutes a master for the system management bus.

8. The method of claim 7, wherein the system management bus operates with an I2C protocol.

9. The method of claim 7 or 8, wherein a power supply unit (104, 106) is coupled to the backplane via a power management bus (108).

10. The method of claim 9, wherein the complex programmable logic device includes a memory (410) that includes power management commands, the method further comprising the complex programmable logic device receiving performance data from the power supply unit via the power management bus.

11. The method of claim 9 or 10, further comprising the first node sending a request to the complex programmable logic device for the performance data.

12. The method of anyone of the claims 7 to 11, wherein at least one of the first and second nodes includes a baseboard management controller (130, 132) coupled to the system management bus.
